# EUROPEAN PATENT APPLICATION

(11) **EP 4 119 870 A1**
(43) Date of publication of application: **18.01.2023**
(21) Application number: 21768237.6
(22) Date of filing: 19.01.2021
(51) Int. Cl.: F25D 23/00, F25D 11/00, F16M 3/00

(54) **BOTTOM SUPPORT ASSEMBLY AND REFRIGERATOR HAVING SAME**

(30) Priority: 12.03.2020 CN 202010170303
(71) Applicant: Qingdao Haier Special Freezer Co. Ltd., Qingdao, Shandong 266101 (CN); Haier Smart Home Co., Ltd., Qingdao, Shandong 266101 (CN)
(72) Inventor: ZHENG, Xiaoyan, Qingdao, Shandong 266101 (CN); LIU, Zhihai, Qingdao, Shandong 266101 (CN); HAN, Yannan, Qingdao, Shandong 266101 (CN); HOU, Hongbin, Qingdao, Shandong 266101 (CN)
(74) Representative: Lavoix
(86) International application number: PCT/CN2021/072639
(87) International publication number: WO 2021/179797

(57) **Abstract**

The present invention provides a base support assembly and a refrigerator having the same. The refrigerator comprises a cabinet, the base support assembly is disposed on an underside of the cabinet and comprises a fixed base, a bracket, a foot disposed on the bracket, and a roller rotatably coupled to the bracket; the fixed base is connected to the cabinet; the bracket is rotatably fitted about a horizontal pivot below the fixed base, to have, relative to the fixed base, an anti-skid position in which the foot touches the floor and the roller is off the floor and a rolling position in which the foot is off the floor and the roller touches the floor. The present invention facilitates moving the refrigerator if necessary, and achieving fixing the refrigerator after the refrigerator is placed in position.

## Description

### TECHNICAL FIELD

The present invention relates to a base support assembly and a refrigerator having the same, and belongs to the technical field of household appliance.

### BACKGROUND

A refrigerator usually employs rollers or feet as base supporting members, which mainly function to support the refrigerator.

If the roller-type base supporting members are employed, since the rollers are rollable relative to the floor, the refrigerators are usually displaced when a large force is applied to open or close the door. Particularly, as people's living standards improve, there is an increasing demand for the capacity of the refrigerator. Large-volume refrigerators increasingly become best-sellers in the market. However, a larger force needs to be applied to the large-volume refrigerators than conventional refrigerators, and the problem of the displacement of refrigerators is more serious.

If the foot-type base supporting members are employed, since sliding friction exists between the feet and the floor, the refrigerator can be firmly retained at a placement position, but there occurs a problem that the refrigerator is inconvenient to move. Moving the refrigerator forcedly will abrade the floor or damage the feet.

### SUMMARY

In view of the above drawbacks in the prior art, an object of the present invention is to provide a base support assembly and a refrigerator having the same, which can solve a problem in the prior art that position fixation and movement of the refrigerator cannot be considered simultaneously.

To achieve the above object of the present invention, an embodiment provides a base support assembly, the base support assembly comprises a fixed base, a bracket, a foot disposed on the bracket, and a roller rotatably coupled to the bracket;

the bracket is rotatably fitted about a horizontal pivot below the fixed base, to have, relative to the fixed base, an anti-skid position in which the foot touches the floor and the roller is off the floor and a rolling position in which the foot is off the floor and the roller touches the floor.

Optionally, when the bracket changes between the anti-skid position and the rolling position, the bracket rotates about the pivot by 180° relative to the fixed base.

Optionally, the fixed base has a first accommodating cavity and a second accommodating cavity that are recessed upward;

when the bracket is located in the anti-skid position, the roller is accommodated in the first accommodating cavity;

when the bracket is located in the rolling position, the foot is accommodated in the second accommodating cavity.

Optionally, the foot is assembled and fitted to a pad of the bracket through a threaded structure.

Optionally, when the bracket is in the rolling position, there is a first height difference in an up-down direction between a bottom end of the roller and a horizontal plane where the pivot lies;

when the bracket is in the anti-skid position, there is a second height difference in the up-down direction between the bottom end of the foot and the horizontal plane where the pivot lies, and as a screw-in depth of the threaded structure changes, the second height difference changes between greater than the first height difference and less than the first height difference.

Optionally, the roller and the foot are separately disposed on opposite sides of the bracket;

the bracket comprises a support plate, the support plate has a first surface and a second surface opposite to the first surface in a first direction, the roller is disposed on a side where the second surface of the support plate lies, and the foot is disposed on a side where the first surface of the support plate lies.

Optionally, when the bracket is in the anti-skid position, the first direction is an up-down direction, the foot is located below the support plate, and the fixed base resists, from above, a partial region which is of the second surface and vertically above the foot.

Optionally, when the bracket is in the rolling position, the first direction is the up-down direction, and the foot is located above the support plate; the pivot, the roller and the foot are disposed in sequentially in a horizontal direction perpendicular to the pivot, and the fixed base resists the foot from above.

To achieve the above object of the present invention, an embodiment of the present invention provides a refrigerator, comprising a cabinet and a base support assembly, and the base support assembly is disposed on an underside of the cabinet and comprises a fixed base, a bracket, a foot disposed on the bracket, and a roller rotatably coupled to the bracket; the base support assembly is connected to the cabinet through the fixed base.

the bracket is rotatably fitted about a horizontal pivot below the fixed base, to have, relative to the fixed base, an anti-skid position in which the foot touches the floor and the roller is off the floor and a rolling position in which the foot is off the floor and the roller touches the floor.

Optionally, when the bracket changes between the anti-skid position and the rolling position, the bracket rotates about the pivot by 180° relative to the fixed base.

Optionally, the fixed base has a first accommodating cavity and a second accommodating cavity that are recessed upward;

when the bracket is located in the anti-skid position, the roller is accommodated in the first accommodating cavity;

when the bracket is located in the rolling position, the foot is accommodated in the second accommodating cavity.

Optionally, the foot is assembled and fitted to a pad of the bracket through a threaded structure.

Optionally, when the bracket is in the rolling position, there is a first height difference in an up-down direction between a bottom end of the roller and a horizontal plane where the pivot lies;

when the bracket is in the anti-skid position, there is a second height difference in the up-down direction between the bottom end of the foot and the horizontal plane where the pivot lies, and as a screw-in depth of the threaded structure changes, the second height difference changes between greater than the first height difference and less than the first height difference.

Optionally, the roller and the foot are separately disposed on opposite sides of the bracket;

the bracket comprises a support plate, the support plate has a first surface and a second surface opposite to the first surface in a first direction, the roller is disposed on a side where the second surface of the support plate lies, and the foot is disposed on a side where the first surface of the support plate lies.

Optionally, when the bracket is in the anti-skid position, the first direction is an up-down direction, the foot is located below the support plate, and the fixed base resists, from above, a partial region which is of the second surface and vertically above the foot.

Optionally, when the bracket is in the rolling position, the first direction is the up-down direction, and the foot is located above the support plate; the pivot, the roller and the foot are disposed in sequentially in a horizontal direction perpendicular to the pivot, and the fixed base resists the foot from above.

Optionally, the refrigerator further comprises a door body movably disposed on a front side of the cabinet, the cabinet having a connection side pivotally connected to the door body and an opening and closing side disposed opposite to the connection side in a left-right direction, wherein the base support assembly is disposed below the opening and closing side, and the refrigerator further comprises a second roller disposed below the connection side.

As compared with the prior art, the present invention has the following advantageous effects: with the foot and the roller being provided on the bracket and with the bracket being arranged to be rotatable relative to the fixed base, the foot and the roller can be made selectively touch the floor; if the refrigerator needs to be moved, the bracket is rotated to the rolling position, and the roller rolls along the floor to thereby achieve the movement of the refrigerator; after the refrigerator is placed in position, the bracket is rotated to the anti-skid position, and the foot touches the floor in place of the roller, thereby achieving the position fixation of the refrigerator, solving the problem of easy displacement due to a large door-opening force and solving the problem in the prior art that position fixation and movement of the refrigerator cannot be considered simultaneously; furthermore, the structural stability is enhanced by disposing the roller and the foot on the bracket.

### BRIEF DESCRIPTION OF THE DRAWINGS

FIG. 1 is a front view of a cabinet structure portion of a refrigerator according to an embodiment of the present invention;
FIG. 2 is a schematic structural view of a base support assembly on an underside of a cabinet according to an embodiment of the present invention, wherein a bracket is in its anti-skid position;
FIG. 3 is a schematic structural view of a base support assembly on an underside of a cabinet according to an embodiment of the present invention, wherein the bracket is in its rolling position;
FIG. 4 is an exploded structural view of a base support assembly according to an embodiment of the present invention;
FIG. 5 is a bottom view of the base support assembly on an underside of a cabinet according to an embodiment of the present invention.

### DETAILED DESCRIPTION

Implementations of the present invention will be described in detail in conjunction with specific embodiments shown in the figures. However, these embodiments are not intended to limit the present invention. Structural, methodological or functional variations made by those having ordinary skill in the art according to these implementations are all comprised in the protection scope of the present invention.

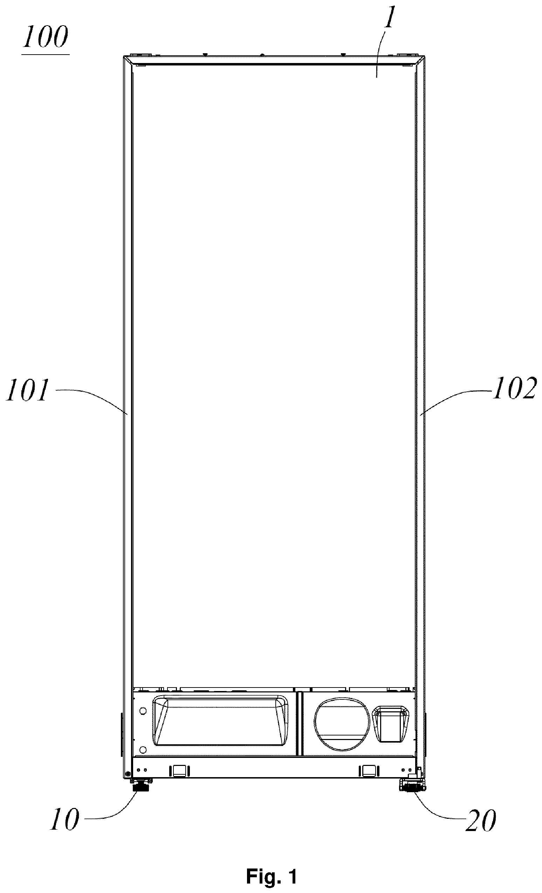

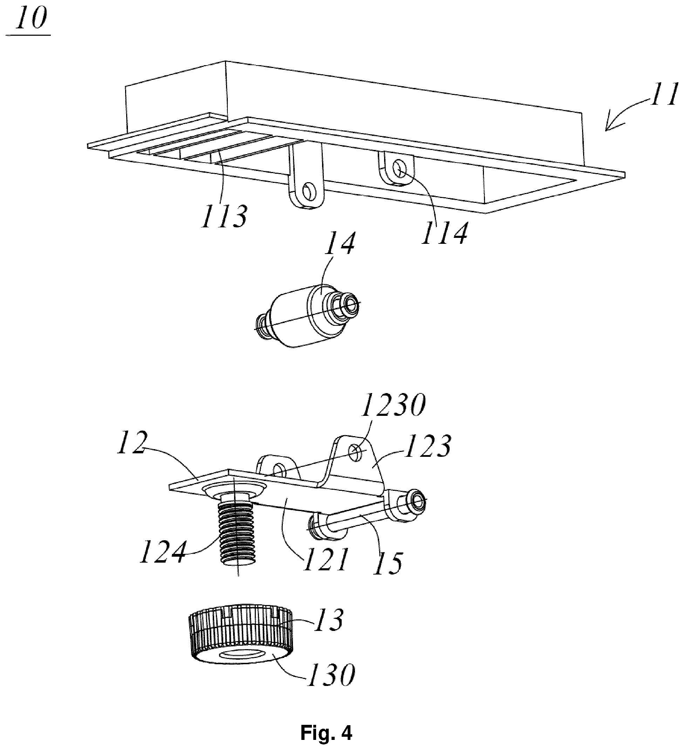

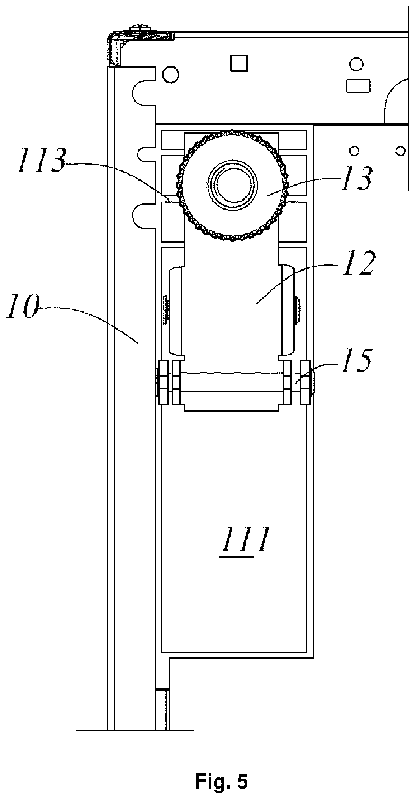

Referring to FIG. 1 through FIG. 5, an embodiment of the present invention provides a base support assembly 10, and provides a refrigerator 100 comprising the base support assembly 10, particularly a large-volume refrigerator, that is, provides an application of the base support assembly 10 on the refrigerator 100. Certainly, the base support assembly 10 may also be applied to other cabinet-type appliances such as freezers and washing machines.

Referring to FIG. 1, the refrigerator 100 comprises a cabinet 1, a door body and the base support assembly 10. The door body is movably disposed on a front side of the cabinet 1 to open or close an internal storage space of the cabinet 1; the base support assembly 10 is disposed on an underside of the cabinet 1 to support the refrigerator 100 on the floor, so that the cabinet 1 is spaced upward apart from the floor by a certain distance. In the present application, the floor generally refers to a supporting surface for placing the refrigerator 100.

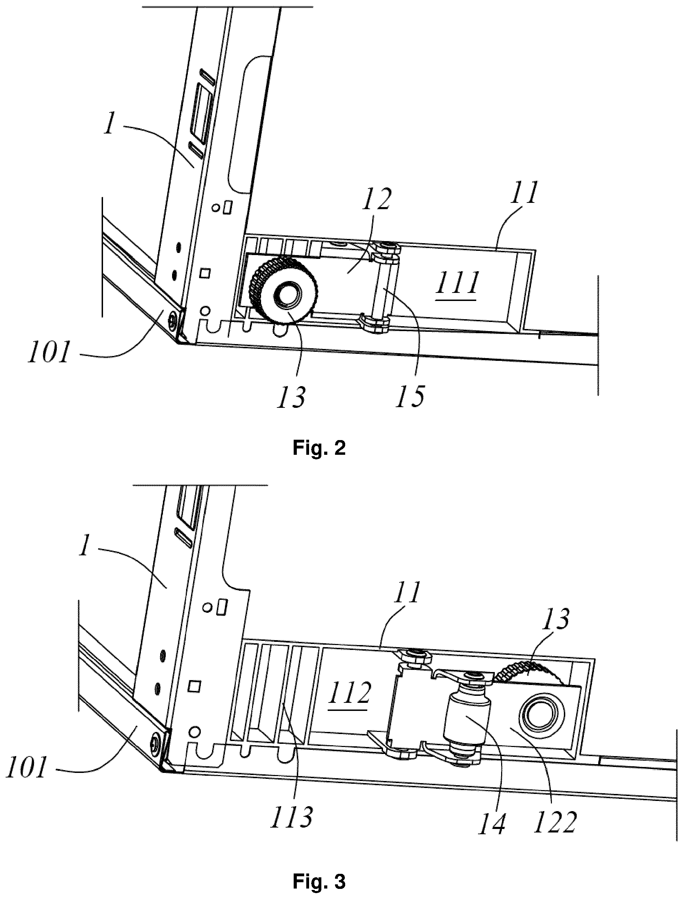

Referring to FIG. 2 to FIG. 5, the base support assembly 10 comprises a fixed base 11, a bracket 12, a foot 13 disposed on the bracket 12, and a roller 14 rotatably coupled to the bracket 12.

The fixed base 11 is used to fix the entire base support assembly 10 on the underside of the cabinet 1. In the present embodiment, the fixed base 11 and a bottom plate of the cabinet 1 are arranged separately. Furthermore, before the foam molding of a thermal insulation layer of the cabinet 1, the fixed base 11 and the bottom plate of the cabinet 1 are first assembled and connected via a screw, a sponge strip, an adhesive tape or other fastening manner, so that after the subsequent foam molding of the thermal insulation layer, the tight connection between the fixed base 11 and the bottom plate may be achieved. Certainly, in a variant embodiment, the fixed base 11 may be integrally formed with the bottom plate of the cabinet 1, i.e., the fixed base 11 is integrally formed on the bottom plate.

The bracket 12 is rotatably fitted about a horizontal pivot 15 below the fixed base 11. Specifically, in the present embodiment, the pivot 15 extends horizontally in a left-right direction, the fixed base 11 has a pair of pivot arms protruding downward, and each of the pivot arms has a through hole 114; the pivot 15 is configured nearby an end of the bracket 12 in a front-rear direction, and left and right ends of the pivot 15 are rotatably mated in the through holes 114, so that the bracket 12 may be connected to the fixed base 11 rotatably about the pivot 15.

The bracket 12 has an anti-skid position and a rolling position within a range of travel of the bracket 12 about the pivot 15. Referring to FIG. 2, in the anti-skid position, the foot 13 touches the floor and the roller 14 is off the floor; Referring to FIG. 3, in the rolling position, the roller 14 touches the floor and the foot 13 is off the floor.

Therefore, on the one hand, when the base support assembly 10 is applied to the refrigerator 100, in the rolling position the roller 14 touches the floor and thereby rolls relative to the floor, which facilitates the movement of the refrigerator 100. After the refrigerator 100 is placed at a proper position, the bracket 12 is rotated from the rolling position to the anti-skid position. At this time, the roller 14 is off the floor, and the foot 13 touches the floor to support the refrigerator 100, thereby fixing the position of the refrigerator 100 and solving the problem of easy displacement of the refrigerator 100 due to an excessive door-opening force; on the other hand, the foot 13 and the roller 14 are respectively connected to the bracket 12, and the structure between the foot 13 and the bracket 12 and between the roller 14 and the bracket 12 is firm.

Furthermore, when the bracket 12 changes between the anti-skid position and the rolling position, it rotates about the pivot 15 by 180° relative to the fixed base 11.

In the present embodiment, the fixed base 11 is generally configured as a rectangular box-shaped structure that opens downward, and configured to have a first accommodating cavity 112 and a second accommodating cavity 111 that are recessed upward. The first accommodating cavity 112 is located in front of the through hole 114, and the second accommodating cavity 111 is located in rear of the through hole 114. Referring to FIG. 2, when the bracket 12 is located in the anti-skid position, the roller 14 is accommodated in the first accommodating cavity 112, and the foot 13 is located below the bracket 12 and the fixed base 11; and referring to FIG. 3, when the bracket 12 is located in the rolling position, the foot 13 is accommodated in the second accommodating cavity 111, and the roller 14 is located below the bracket 12 and the fixed base 11. Therefore, by providing the first accommodating cavity 112 for accommodating the roller 14 and the second accommodating cavity 111 for accommodating the foot 13, hidden states of the roller 14 and the foot 13 when they are respectively off the floor can be achieved, thereby avoiding accidental collision and damages of the exposed roller and foot when they needn't touch the floor, and improving the aesthetics of the bottom of the refrigerator 100.

Furthermore, the roller 14 and the foot 13 are separately disposed on opposite sides of the bracket 12. Such a spatial arrangement enables the roller 14, the foot 13 and the bracket 12 to be arranged more concise and reasonable in space while enabling the roller 14 and foot 13 to touch the floor alternatingly.

Specifically, the bracket 12 comprises a support plate, the support plate has a first surface 121 and a second surface 122 parallel to and opposite to the first surface 121 in a first direction, and the roller 14 is disposed on a side where the second surface 122 of the support plate lies, and the foot 13 is disposed on the side where the first surface 121 of the support plate lies. In other words, the roller 14 is located on the side of the second surface 122 away from the first surface 121, and the foot 13 is located on the side of the first surface 121 away from the second surface 122. In the first direction, the roller 14, the second surface 122, the first surface 121 and the foot 13 are arranged sequentially. Such spatial arrangement makes the spatial arrangement of the rollers 14, the foot 13 and the bracket 12 more concise and reasonable.

In the present embodiment, the support plate extends substantially along a plane, and the first direction is a vertical direction of the support plate. Correspondingly, the first surface 121 and the second surface 122 constitute two major surfaces of the support plate which are large in area, parallel to and opposite to each other. The two surfaces are perpendicular to the vertical direction.

In the anti-skid position and the rolling position, the support plate extends substantially in the horizontal direction, the first direction is an up-down direction, the second surface 122 is vertically opposite to the first surface 121, and correspondingly, the roller 14 and the feet 13 are separately disposed on upper and lower sides of the support plate. In the anti-skid position, the second surface 122 is above the first surface 121, the roller 14 is located on the upper side of the support plate, and the foot 13 is located on the lower side of the support plate; in the rolling position, the second surface 122 is below the first surface 121, the roller 14 is located on the lower side of the support plate, and the foot 13 is located on the lower side of the support plate.

Furthermore, the bracket 12 further comprises two cantilevered plates 123 connected with left and right edges of the support plate; the two cantilevered plates 123 are arranged opposite to each other in the left-right direction and protrude from the second surface 122 in the aforesaid first direction; each cantilevered plate 123 has a through hole 1230. The left and right ends of the roller 14 are rotatably arranged in the through holes 1230 so that the roller 14 is relatively rotatably connected to the bracket 12 about an axis extending in the left-right direction, such that the refrigerator 100 can roll back and forth along the floor via the roller 14 when the bracket is in the rolling position.

Furthermore, the foot 13 is assembled and fitted to the bracket 12 through a threaded structure. Specifically in the present embodiment, the threaded structure comprises a bolt 124 and a threaded hole adapted thereto. The bolt 124 is fixedly connected to the support plate and protrudes from the first surface 121 in the first direction, and the threaded hole is provided in the center of the foot 13. Through the engagement of the threaded hole and the bolt 124, the foot 13 is fitted to the bracket 12 in a way of being screwed in or out in the first direction.

As stated above, in the anti-skid position and in the rolling position, the first direction is the up-down direction, and the foot 13 is screwed in or out in the up-down direction relative to the bracket 12 through the engagement of the threaded hole and the bolt 124.

A horizontal plane where the pivot 15 is located is defined by a horizontal plane where a center line of the pivot 15 is located. Preferably, when the bracket 12 is in the rolling position, a bottom end of the roller 14 touches the floor, there is a first height difference in the up-down direction between the bottom end of the roller 14 and the horizontal plane where the pivot 15 lies, and the first height difference is a height by the horizontal plane where the pivot 15 lies is above the floor; when the bracket 12 is in the anti-skid position, a bottom end 130 of the foot 13 touches the floor, there is a second height difference in the up-down direction between the bottom end 130 of the foot 13 and the horizontal plane where the pivot 15 lies, and the second height difference is a height by the horizontal plane where the pivot 15 lies is above the floor. In the present application, as a screw-in depth of the threaded structure changes, the second height difference changes between greater than the first height difference and less than the first height difference. In this way, the height may be adjusted through the threaded structure. On this basis, as the screw-in depth of the threaded structure is adjusted, the height by which the foot 13 lifts up the cabinet 1 can be larger than or smaller than the height by which the roller 14 lifts up the cabinet 1, thereby adjusting the cabinet 1 in balance.

Furthermore, when the bracket 12 is in the anti-skid position, the foot 11 is located on the lower side of the support plate as described above, the fixed base 11 resists a partial region of the second surface 122 from above, and the partial region is located vertically above (i.e., just above) the foot 13. As such, the downward pressure of the cabinet 1 is transmitted vertically downward via the bracket 12, through the support plate to the foot 13, thereby avoiding a torque force received by the pivot 15 or bracket 12 itself.

When the bracket 12 is in the rolling position, the roller 14 is located on the lower side of the support plate as stated above, the foot 13 is located on the upper side of the support plate, the fixed base 11 resists the foot 13 from above, i.e., the foot 13 resists a top wall of the second accommodating cavity 111. In this way, in addition to the position of the pivot 15, the downward pressure of the cabinet 1 may also be transmitted downward to the roller 14 through the foot 13 and the bracket 12, to maintain structural stability.

Preferably, in the horizontal direction perpendicular to the pivot 15, i.e., in the front-rear direction in the present embodiment, the pivot 15, the roller 14 and the foot 13 are arranged sequentially. In this way, when the bracket 12 is in the rolling position, the roller 14 is located between the pivot 15 and the foot 13, and the bracket 12 resists the fixed base 11 through the pivot 15 and the foot 13, thereby ensuring the structural strength and position stability at the roller 14.

Furthermore, the fixed base 11 has a plurality of ribs 113 located in front of the first accommodating cavity 112. When the bracket 12 is in the anti-skid position, the ribs 113 resist the abovementioned partial region of the second surface 122 from above, that is, the ribs 113 are located vertically above (i.e., just above) the foot 13, thereby facilitating resisting and limiting the bracket 12 and transmitting the pressure to the bracket 12.

Furthermore, the bottom end 130 of the foot 13 is provided with a rubber end face. Therefore, when the bracket 12 is in the anti-skid position, the bottom end 130 touches the floor to further avoid the accidental displacement of the refrigerator 100 due to an excessive door-opening force through the flexibility and high friction coefficient of the bottom end 130, thereby ensuring positional stability.

Furthermore, further referring to FIG. 1, the cabinet 1 has a connection side 102 pivotally connected to the door body and an opening and closing side 101 disposed opposite to the connection side 102 in the left-right direction. The base support assembly 10 is disposed below the opening and closing side 101, and a second roller 20 is disposed below the connection side 102, that is, the base support assembly 10 is disposed relatively close to the opening and closing side 101 among both the connection side 102 and the opening and closing side 101, while the second roller 20 is disposed relatively close to the connection side 102 among both the connection side 102 and the opening and closing side 101. Therefore, since the opening and closing side 101 is more likely to move accidentally than the connection side 102 as the door is opened and closed, the present embodiment may prevent the opening and closing side 101 from move accidentally through the base support assembly 10, may achieve fast movement of the refrigerator 100 through the cooperation of the second roller 20 and the roller 14, thereby avoiding excessively cumbersome operations upon moving the refrigerator 100 caused by an excessive number of base support assemblies 10 arranged.

To conclude, as compared with the prior art, the present invention has the following advantageous effects: on the one hand, by switching the bracket 12 between the rolling position and the anti-skid position, the problem of easy displacement caused by the opening of the door after the refrigerator 100 is placed at a proper position can be solved, and the refrigerator 100 is facilitated to move if necessary; on the other hand, the foot 13 and roller 14 are both connected to the bracket 12, and the structures of the parts in the base support assembly 10 are optimized, so that the construction is firm.

The detailed descriptions set forth above are merely specific illustrations of feasible embodiments of the present invention, and are not intended to limit the scope of protection of the present invention. All equivalent embodiments or modifications that do not depart from the art spirit of the present invention should fall within the scope of protection of the present invention.

## Claims

1. A base support assembly, wherein the base support assembly comprises a fixed base, a bracket, a foot disposed on the bracket, and a roller rotatably coupled to the bracket;
the bracket is rotatably fitted about a horizontal pivot below the fixed base, to have, relative to the fixed base, an anti-skid position in which the foot touches the floor and the roller is off the floor and a rolling position in which the foot is off the floor and the roller touches the floor.

2. The base support assembly according to claim 1, wherein when the bracket changes between the anti-skid position and the rolling position, the bracket rotates about the pivot by 180° relative to the fixed base.

3. The base support assembly according to claim 1, wherein the fixed base has a first accommodating cavity and a second accommodating cavity that are recessed upward;
when the bracket is located in the anti-skid position, the roller is accommodated in the first accommodating cavity;
when the bracket is located in the rolling position, the foot is accommodated in the second accommodating cavity.

4. The base support assembly according to claim 1, wherein the foot is assembled and fitted to a pad of the bracket through a threaded structure.

5. The base support assembly according to claim 4, wherein when the bracket is in the rolling position, there is a first height difference in an up-down direction between a bottom end of the roller and a horizontal plane where the pivot lies;
when the bracket is in the anti-skid position, there is a second height difference in the up-down direction between the bottom end of the foot and the horizontal plane where the pivot lies, and as a screw-in depth of the threaded structure changes, the second height difference changes between greater than the first height difference and less than the first height difference.

6. The base support assembly according to claim 1, wherein the roller and the foot are separately disposed on opposite sides of the bracket;
the bracket comprises a support plate, the support plate has a first surface and a second surface opposite to the first surface in a first direction, the roller is disposed on a side where the second surface of the support plate lies, and the foot is disposed on a side where the first surface of the support plate lies.

7. The base support assembly according to claim 6, wherein when the bracket is in the anti-skid position, the first direction is an up-down direction, the foot is located below the support plate, and the fixed base resists, from above, a partial region which is of the second surface and vertically above the foot.

8. The base support assembly according to claim 7, wherein when the bracket is in the rolling position, the first direction is the up-down direction, and the foot is located above the support plate; the pivot, the roller and the foot are disposed in sequentially in a horizontal direction perpendicular to the pivot, and the fixed base resists the foot from above.

9. A refrigerator, comprising a cabinet, wherein the refrigerator comprises the base support assembly according to claim 1, and the base support assembly is disposed on an underside of the cabinet and connected to the cabinet through the fixed base.

10. The refrigerator according to claim 9, further comprising a door body movably disposed on a front side of the cabinet, the cabinet having a connection side pivotally connected to the door body and an opening and closing side disposed opposite to the connection side in a left-right direction, wherein the base support assembly is disposed below the opening and closing side, and the refrigerator further comprises a second roller disposed below the connection side.
